# EUROPÄISCHE PATENTSCHRIFT

(11) **EP 4 145 696 B1**
(45) Veröffentlichungstag und Bekanntmachung des Hinweises auf die Patenterteilung: **25.11.2026**
(21) Anmeldenummer: 21194536.5
(22) Anmeldetag: 02.09.2021
(51) Int. Cl.: H02M 7/483, H02M 1/00

(54) **STROMRICHTER SOWIE VERFAHREN ZU DESSEN BETRIEB**
INVERTER AND METHOD FOR ITS OPERATION
CONVERTISSEUR, AINSI QUE SON PROCÉDÉ DE FONCTIONNEMENT

(43) Veröffentlichungstag der Anmeldung: 08.03.2023
(73) Patentinhaber: Siemens Energy Global GmbH & Co. KG, 81739 München (DE)
(72) Erfinder: Dallmer-Zerbe, Kilian, 91088 Bubenreuth (DE); Roman Marcos, Diego Alberto, 91052 Erlangen (DE); Alvarez Valenzuela, Rodrigo Alonso, 90408 Nürnberg (DE)

(56) Entgegenhaltungen:
- WO-A1-2021/038246
- CN-A- 106 787 880
- CN-A- 107 404 247
- DEKKA APPARAO ET AL: "An improved indirect model predictive control approach for modular multilevel converter", IECON 2016 - 42ND ANNUAL CONFERENCE OF THE IEEE INDUSTRIAL ELECTRONICS SOCIETY, IEEE, 23 October 2016 (2016-10-23), pages 5959 - 5964, XP033033283, DOI: 10.1109/IECON.2016.7793081
- FARD RAZIEH NEJATI ET AL: "Analysis of a Modular Multilevel inverter under the predicted current control based on Finite-Control-Set strategy", 2013 3RD INTERNATIONAL CONFERENCE ON ELECTRIC POWER AND ENERGY CONVERSION SYSTEMS, IEEE, 2 October 2013 (2013-10-02), pages 1 - 6, XP032550893, DOI: 10.1109/EPECS.2013.6713046
- DEKKA APPARAO ET AL: "Indirect Control of Capacitor Voltage Ripple and Circulating Current in a Modular Multilevel Converter", IECON 2018 - 44TH ANNUAL CONFERENCE OF THE IEEE INDUSTRIAL ELECTRONICS SOCIETY, IEEE, 21 October 2018 (2018-10-21), pages 3955 - 3960, XP033486106, DOI: 10.1109/IECON.2018.8591523
- CHAN ROH ET AL: "Simple algorithm with fast dynamics for cascaded H-bridge multilevel inverter based on model predictive control method", 2017 IEEE APPLIED POWER ELECTRONICS CONFERENCE AND EXPOSITION (APEC), IEEE, 26 March 2017 (2017-03-26), pages 696 - 702, XP033098310, [retrieved on 20170517], DOI: 10.1109/APEC.2017.7930770
- JOSE BIFFIE ET AL: "Analysis of control strategies in transformerless dynamic voltage restorer", 2017 INTERNATIONAL CONFERENCE ON INNOVATIVE RESEARCH IN ELECTRICAL SCIENCES (IICIRES), IEEE, 16 June 2017 (2017-06-16), pages 1 - 7, XP033233705, [retrieved on 20171020], DOI: 10.1109/IICIRES.2017.8078293
- YARAMASU VENKATA ET AL: "Modulated Predictive Voltage Control of a Four-Leg Inverter with Fixed Switching Frequency", 2020 11TH POWER ELECTRONICS, DRIVE SYSTEMS, AND TECHNOLOGIES CONFERENCE (PEDSTC), IEEE, 4 February 2020 (2020-02-04), pages 1 - 6, XP033769370, [retrieved on 20200506], DOI: 10.1109/PEDSTC49159.2020.9088438
- RAZANI RAMIN ET AL: "A modified indirect model predictive control for modular multilevel converters", 2017 IRANIAN CONFERENCE ON ELECTRICAL ENGINEERING (ICEE), IEEE, 2 May 2017 (2017-05-02), pages 1366 - 1371, XP033124294, [retrieved on 20170719], DOI: 10.1109/IRANIANCEE.2017.7985255

## Beschreibung

Die Erfindung betrifft ein Verfahren zum Betreiben eines Stromrichters mit wenigstens einer Reihenschaltung von Schaltmodulen, die jeweils Halbleiterschalter und einen Energiespeicher aufweisen.

Ein solches Verfahren ist beispielsweise aus der EP 3 713 073 A1 bekannt. Bei dem bekannten Verfahren wird ein Schaltfrequenzregler eingesetzt, um die Schaltfrequenz und damit die Schaltverluste je Arbeitspunkt einzuregeln. Dazu wird ein Fehlerintegral zwischen aktuell gestellter Spannung und Sollspannung berechnet, um bei über bzw. unterschreiten eines Integralgrenzwertes eine Schalthandlung auszulösen. Insbesondere wird bei einem Überschreiten des oberen Integralgrenzwertes wenigstens ein abgeschaltetes Schaltmodul zugeschaltet beziehungsweise im Fall von bipolar schaltbaren Schaltmodulen (wie Vollbrückenschaltmodule) ein negativ eingeschaltetes Schaltmodul abgeschaltet (gesperrt) wird. Bei einem Unterschreiten des unteren Integralgrenzwertes wird hingegen wenigstens ein zugeschaltetes Schaltmodul abgeschaltet (im Fall von Vollbrückenschaltmodulen kann ein Schaltmodul mit negativer Polarität zugeschaltet werden). Die beiden Integralgrenzwerte bzw. deren Differenz definieren damit einen zulässigen Spannungsabweichungsbereich. Je größer der Spannungsabweichungsbereich ist, desto niedriger ist die resultierende (mittlere) Schaltfrequenz. Eine Reduktion des Integralgrenzwertes resultiert dabei in einer Erhöhung der Schaltfrequenz, entsprechend resultiert eine Erhöhung des Integralgrenzwertes in einer Reduktion der Schaltfrequenz. Das bekannte Verfahren wird üblicherweise als toleranzbasierte Modulation ("Tolerance Based Modulation", TBM) bezeichnet.

Ein weiterer bekannter Ansatz zum Modulieren der Spannung in einem Stromrichter ist die sogenannte "Nearest Level Modulation" (NLM). Durch diese lässt sich die Schaltfrequenz stark absenken. Allerdings führen typische NLM-Ansätze zu schlechteren Werten der sogenannten gesamten harmonischen Verzerrung ("Total Harmonic Distortion", THD) auf.

Es ist bekannt, dass beim Betrieb von Stromrichtern Verluste anfallen, die vor allem von Durchlassverlusten und den erwähnten Schaltverlusten der verwendeten Schaltmodule abhängen. In Anwendungen in Übertragungsnetz führen diese Verluste zu einer Erhöhung der Betriebskosten. Zugleich ist eine optimale Betriebsleistung bezüglich der Harmonischen und der Verzerrung gefordert, so dass beim Betrieb des Stromrichters eine Abwägung zwischen der Total Harmonic Distortion und den Verlusten getroffen werden muss. Die bereits genannten Schaltverluste lassen sich nicht beliebig reduzieren, ohne eine Spannungs-Unsymmetrie zwischen den Schaltmodulen eines Stromrichterarmes zu erhöhen. Eine niedrige Schaltfrequenz führt insbesondere dazu, dass einzelne Schaltmodule unter Umständen länger im Strompfad verbleiben, wobei die Unsymmetrie steigt. Diese Unsymmetrie führt im Fehlerfall zu einer potentiell geringeren Energieaufnahmefähigkeit der Schaltmodule (bevor deren Schutzgrenzen erreicht werden). Bei der Auslegung führt das meist zu einer (bezüglich Herstellungs- und Betriebskosten) nachteiligen Erhöhung der Anzahl der verbauten Schaltmodule. Zudem kann die Unsymmetrie unter Umständen zu einer Lebenszeitverkürzung der Schaltmodule und damit des gesamten Stromrichters führen.

Aus der WO 2021/038246 A1 ist ein Verfahren zum Regeln eines MMC bekannt, bei dem zum Zwecke einer Reduktion der Schaltfrequenz der Schaltmodule eine Vorhersage von Spannungswerten der Schaltmodule durchgeführt wird.

Die Aufgabe der Erfindung ist es, ein artgemäßes Verfahren anzugeben, dass einen möglichst kostengünstigen und zuverlässigen Betrieb des Stromrichters ermöglicht.

Die Aufgabe wird bei einem artgemäßen Verfahren erfindungsgemäß dadurch gelöst, dass eine Vorhersage wenigstens eines Spannungswertes des Stromrichters durchgeführt wird und zum Regeln einer Schaltfrequenz Schalthandlungen an den Schaltmodulen auf der Grundlage der Vorhersage durchgeführt werden. Die Schalthandlungen an den Schaltmodulen können durch Schalten der Halbleiterschalter der Schaltmodule realisiert bzw. durchgeführt werden. Mittels einer Schalthandlung an einem der Schaltmodule kann beispielsweise der Energiespeicher dieses Schaltmoduls in den Strompfad der Reihenschaltung eingefügt oder aus dem Strompfad der Reihenschaltung entfernt werden. Geeigneterweise umfassen die Schaltmodule dazu abschaltbare Halbleiterschalter, wie bsp. IGBT, IGCT oder dergleichen. Gemäß der Erfindung werden die Schalthandlungen zumindest auch auf der Grundlage einer Vorhersage über künftig zu erwartende Spannungswerte durchgeführt. Damit kann bei der Wahl der Schalthandlungen vorteilhaft berücksichtigt werden, welche Schalthandlungen die künftige Entwicklung des Spannungswertes unterstützen bzw. dieser zuwiderlaufen. Auf diese Weise kann die Effektivität der Schaltfrequenzregelung erhöht werden. Insbesondere kann die Schaltfrequenz und die damit verbundenen Verluste reduziert werden, ohne dass der THD-Wert zugleich erhöht wird.

Gemäß der Erfindung ist der Spannungswert ein Spannungssollwert für eine Armspannung des Stromrichters. Der Stromrichter kann einen oder mehrere Stromrichterarme umfassen, die jeweils eine Reihenschaltung der Schaltmodule aufweisen. Die Armspannung ist die an dem Stromrichterarm bzw. an der zugehörigen Reihenschaltung anstehende Spannung. Gemäß dieser Variante werden Schalthandlungen unter Berücksichtigung der zu erwartenden Sollspannung für den jeweiligen Stromrichterarm durchgeführt.

Erfindungsgemäß wird die Vorhersage auf der Grundlage von wenigstens zwei vorhergehenden Spannungswerten der Armspannung durchgeführt. Die Berücksichtigung von zwei Spannungswerten erlaubt beispielsweise eine einfache lineare Extrapolation, so dass eine Vorhersage bzw. Schätzung eines nächstkünftigen Spannungswertes ermöglicht ist. Eine Berücksichtigung einer höheren Anzahl vergangener Spannungswerte ermöglicht eine genauere Vorhersage (z.B. eine nichtlineare Extrapolation).

Die Vorhersage umfasst das Berechnen diskreten zeitlichen Ableitung der vorhergehenden Spannungswerte. Im einfachsten Fall kann die Berechnung der Ableitung dU/dt darin bestehen, die Differenz zwischen zwei vergangenen Spannungswerten (vorzugsweise den zwei letztvergangenen) zu bestimmen, DeltaU = U(t2) - U(t1), die durch ihren zeitlichen Abstand geteilt wird, dU/dt = DeltaU / (t2 - t1). Es sind aber auch andere Methoden denkbar, beispielsweise eine Modellierung einer Funktion eines zeitlichen Verlaufes der vergangenen Spannungswerte, wobei eine Ableitung dieser Funktion für die Vorhersage verwendet wird.

In manchen Anwendungen ist es nicht notwendig, dass als Ergebnis der Vorhersage ein vorhergesagter Spannungswert (zum Beispiel ein nächstkünftiger zu erwartender Spannungswert bereitgestellt wird). Vielmehr kann es ausreichend sein, eine Tendenz des künftigen zeitlichen Verlaufes der Spannungswerte zu bestimmen. Es wird als ein Ergebnis der Vorhersage eine Änderungsinformation darüber bereitgestellt, ob ein (gemäß der Vorhersage) zu erwartender nächstkünftiger Spannungswert höher oder niedriger als der aktuell gültige Spannungswert ist.

Ist die Tendenz bekannt, so kann eine Schalthandlung verhindert werden, die zu einer gegenüber der Änderungsinformation gegenläufigen Änderung der Armspannung führt. Es gibt Schalthandlungen, die zu einer Erhöhung der Armspannung führen. Beispielsweise kann ein Einfügen eines positiv geladenen Energiespeichers in den Strompfad des Stromrichterarmes die Armspannung erhöhen. Es gibt des Weiteren Schalthandlungen, die zu einer Senkung der Armspannung führen. Zum Beispiel kann ein Überbrücken eines Energiespeichers die Armspannung senken. Ist aufgrund der Änderungsinformation zu erwarten, dass der Spannungswert, beispielsweise der Spannungssollwert, künftig steigen wird, so werden Schalthandlungen verhindert, die zu einer Absenkung der Armspannung des zugehörigen Stromrichterarmes führen würden. Ist aufgrund der Änderungsinformation zu erwarten, dass der Spannungswert, beispielsweise der Spannungssollwert, künftig sinken wird, so werden Schalthandlungen verhindert, die zu einer Erhöhung der Armspannung des zugehörigen Stromrichterarmes führen würden. Das Verhindern kann beispielsweise mittels einer übergeordneten Regelungsabfrage implementiert werden. Die Regelungsabfrage wird demnach einer Regelungsfunktion nachgeschaltet, die im Rahmen einer Schaltfrequenzregelung nächstauszuführende Schalthandlungen ermittelt bzw. bestimmt.

Gemäß der Erfindung wird als ein Ergebnis der Vorhersage ein zu erwartender nächstkünftiger Spannungswert bereitgestellt. Die Schalthandlung wird nur dann verhindert, wenn eine absolute Differenz zwischen dem (zu erwartenden) nächstkünftigen und dem aktuell gültigen Spannungswert größer als eine vorbestimmte Schwelle (ein vorbestimmter Schwellenwert) ist. Prädiktionen, die nicht eindeutig genug sind, können herausgefiltert werden. Durch die Verwendung des Schwellwertes kann vorteilhaft erreicht werden, dass Schalthandlungen in denjenigen Fällen nicht verhindert werden, in denen die Vorhersage nicht zuverlässig genug ist. Ein Beispiel dafür wäre etwa das Halten eines Spannungsplateaus, bei dem Spannungssollwerte nahezu konstant sind und eine Änderungsinformation unter Umständen nicht verwertbar ist.

Das Regeln der Schaltfrequenz umfasst die bereits beschriebene toleranzbasierte Modulation. Die Schaltfrequenzregelung kann dabei insbesondere eine Regelung einer mittleren Schaltfrequenz eines der Stromrichterarme aufweisen. Ein oberer und ein unterer Integralgrenzwert können beispielsweise wie folgt bestimmt werden. Zunächst wird eine Spannungsabweichung als Differenz zwischen einem Spannungssollwert und einem ermittelten Spannungsistwert berechnet. Der Spannungsistwert ist bevorzugt eine Summe der gemessenen Energiespeicherspannungen der Schaltmodule, das heißt, der am jeweiligen Energiespeicher der Schaltmodule anstehenden Spannungen aller zugeschalteten Schaltmodule im betreffenden Stromrichterarm. Die Spannungsabweichung wird dann in der Zeit diskret integriert. Der obere Integralgrenzwert definiert den maximalen zulässigen Wert des Integrals, der untere Integralgrenzwert definiert den minimalen zulässigen Wert des Integrals.

Gemäß einer Ausführungsform der Erfindung ist der Spannungswert eine Armspannung eines Stromrichterarmes. Ein Spannungssollwert für die Armspannung wird dabei unter Berücksichtigung der Vorhersage bestimmt. Demnach wird eine Prädiktion der Aufladung bzw. der Entladung des Stromrichters (bzw. zumindest eines dessen Stromrichterarme) während des Rechenzyklus des Regelungssystems durchgeführt. Aus den aktuellen Schaltzuständen und einer Prädiktion des Armstromes wird bestimmt, um wieviel sich die Spannung des Stromrichterarms voraussichtlich während des Rechenzyklus des Regelungssystems verändert. Die Regelung des Spannungssollwertes berücksichtigt nun diese Information anstatt des Messwertes der Armspannung. So können Schalthandlungen vermieden werden, die sich durch eigene Ladung bzw. Entladung während des Rechenzyklus erübrigen.

Als eine weitere Variante ist es auch denkbar, dass der Spannungswert eine an dem Energiespeicher des Schaltmoduls anstehende Energiespeicherspannung ist.

Die Erfindung betrifft einen Stromrichter mit wenigstens einer Reihenschaltung von Schaltmodulen, die jeweils Halbleiterschalter und einen Energiespeicher aufweisen.

Ein solcher Stromrichter ist aus der bereits erwähnten EP 3 713 073 A1 bekannt. Der Stromrichter kann Stromrichterarme umfassen, die jeweils zwischen einem DC-Pol und einem AC-Anschluss oder auch zwischen zwei AC-Anschlüssen geschaltet sind. Die Reihenschaltung der Schaltmodule ist in einem der Stromrichterarme angeordnet. Der Stromrichter kann zum Umwandeln einer Gleichspannung in eine Wechselspannung (und umgekehrt) eingerichtet sein. Der Stromrichter kann aber auch zu einer Frequenzumwandlung oder auch zu einer Stabilisierung eines Wechselspannungsnetztes eingerichtet sein. Der Stromrichter umfasst üblicherweise eine Regelungseinrichtung. Mittels der Regelungseinrichtung kann eine Regelung von Regelungsparametern des Stromrichters durchgeführt werden. Regelungsparameter können beispielsweise eine Spannung, ein Strom oder eine Leistung sein. Insbesondere kann eine Armspannung geregelt werden, also die an einem der Stromrichterarme anstehende Spannung. Ein solcher Stromrichter wird oftmals als ein modularer Mehrstufenumrichter bezeichnet.

Die Aufgabe der Erfindung ist es, einen artgemäßen Stromrichter anzugeben, der möglichst kostengünstig und zuverlässig im Betrieb ist.

Die Aufgabe wird mit einem artgemäßen Stromrichter erfindungsgemäß durch eine Regelungseinrichtung gelöst, die zum Durchführen eines erfindungsgemäßen Verfahrens eingerichtet ist.

Die Vorteile des erfindungsgemäßen Stromrichters ergeben sich insbesondere aus den Vorteilen, die im Zusammenhang mit dem erfindungsgemäßen Verfahren bereits beschrieben wurden.

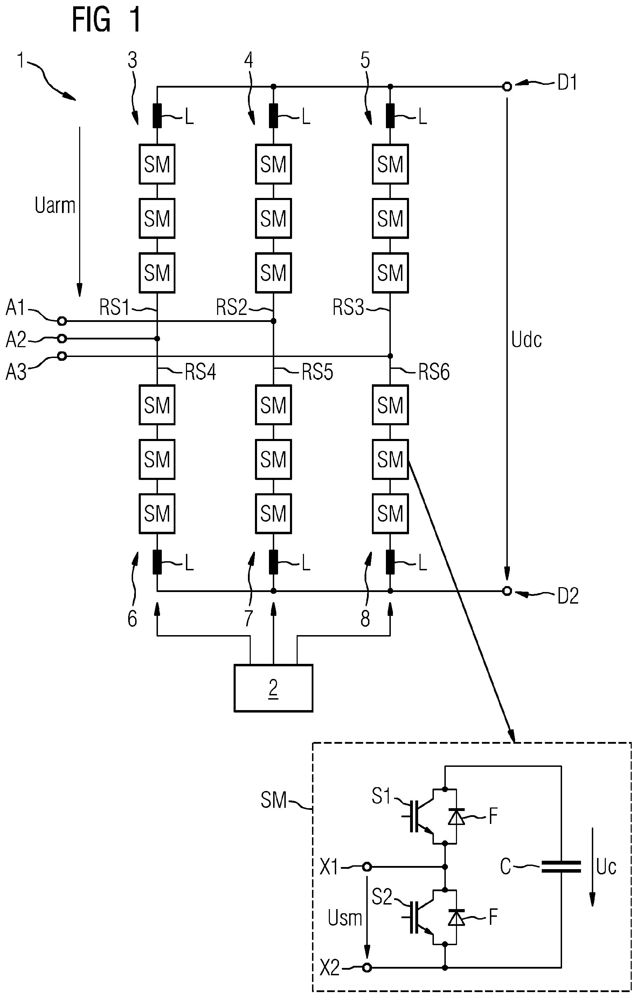

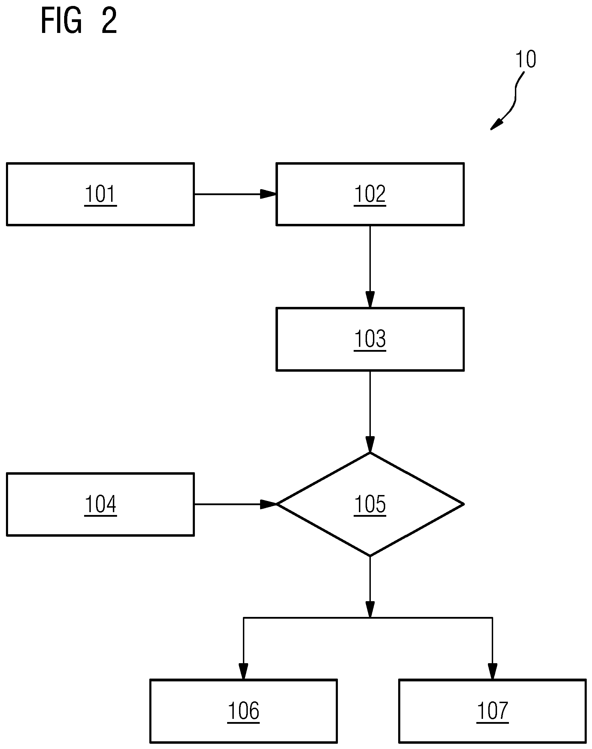

Die Erfindung wird nachfolgend Anhand der Figuren 1 und 2 weiter erläutert.

Figur 1 zeigt ein Ausführungsbeispiel eines erfindungsgemäßen Stromrichters in einer schematischen Darstellung;

Figur 2 zeigt ein Ausführungsbeispiel eines erfindungsgemäßen Verfahrens in einer schematischen Darstellung.

In Figur 1 ist ein Stromrichter 1 dargestellt, der oftmals als modularer Mehrstufenumrichter (MMC) bezeichnet wird. Der Stromrichter 1 umfasst sechs Stromrichterarme 3-8 mit Reihenschaltungen RS1-RS6, die jeweils eine Vielzahl von Schaltmodulen SM umfassen, sowie mit einer Induktivität L (Armdrossel). Der MMC ist im dargestellten Beispiel zur Umwandlung einer Wechselspannung eines Wechselspannungsnetzes, mit dem der MMC 1 beispielsweise mittels Anschlüsse A1-A3 sowie eines Netztransformators verbunden sein kann, in eine Gleichspannung UDC (oder umgekehrt) eingerichtet. Mittels der Anschlüsse D1, D2 kann der Stromrichter 1 mit einem Gleichspannungsnetz bzw. einer Gleichspannungsleitung verbunden werden. Der Stromrichter 1 umfasst ferner eine Regelungseinrichtung 2, die zur Stromrichterregelung eingerichtet ist. Dabei können Strom, Spannung, Leistung und Frequenz mittels der Regelungseinrichtung 2 geregelt werden. Zum Beispiel kann mittels der Regelungseinrichtung 2 kann eine Armspannung Uarm geregelt werden, wobei die Armspannung Uarm die an dem ersten Stromrichterarm 3 anstehende Spannung bezeichnet.

In dem in Figur 1 dargestellten Beispiel sind alle Schaltmodule SM gleichartig ausgebildet. Grundsätzlich ist es aber auch denkbar, dass unterschiedlich ausgebildete Schaltmodule in einem und demselben Stromrichter verwendet werden, beispielsweise Halbbrückenschaltmodule und Vollbrückenschaltmodule. Das Schaltmodul SM umfasst einen Kondensatorzweig, in dem ein erster Halbleiterschalter S1 mit einer antiparallelen Freilaufdiode F sowie in Reihe dazu ein Energiespeicher C angeordnet sind. In einem Brückenzweig zwischen zwei Anschlüssen X1, X2 des Schaltmoduls SM ist ein zweiter Halbleiterschalter S2 mit einer antiparallelen Freilaufdiode F angeordnet. Durch geeignete Ansteuerung der beiden Halbleiterschalter S1, S2 kann an den Anschlüssen X1, X2 eine Schaltmodulspannung Usm erzeugbar, die der Kondensatorspannung Uc oder aber einer Nullspannung entspricht.

In Figur 2 ist ein Ablaufdiagramm 100 für ein Verfahren zum Betreiben eines Stromrichters, wie beispielsweise des Stromrichters 1 der Figur 1. In einem ersten Verfahrensschritt 101 werden zwei vergangene bzw. vorhergehende Spannungssollwerte S(t1) und S(t2) für eine Armspannung eines Stromrichterarmes bereitgestellt. Jedem der vergangenen Spannungssollwerte ist dabei ein vergangener Zeitpunkt t1 bzw. t2 zugeordnet, wobei t1 < t2. Zu einer Vorhersage künftiger Spannungssollwerte wird wie folgt vorgegangen. In einem zweiten Verfahrensschritt 102 wird eine diskrete Ableitung DeltaS/Deltat errechnet: DeltaS/Deltat = (S(t2) - S(t1)) / (t2 - t1). In einem dritten Verfahrensschritt 103 werden der Absolutwert |DeltaS/Deltat| sowie eine Änderungsinformation abgespeichert und bereitgestellt, wobei die Änderungsinformation angibt, ob DeltaS/Deltat > 0, DeltaS/Deltat < 0 oder DeltaS/Deltat = 0 ist.

In einem vierten Verfahrensschritt 105 wird eine vorbestimmte, festgelegte Schwelle bzw. ein vorbestimmter Schwellenwert bereitgestellt. In einem fünften Verfahrensschritt 106 wird überprüft, ob der Absolutwert größer als der vorgegebene Schwellenwert ist. Falls der Absolutwert unterhalb der Schwelle liegt (bzw. die Schwelle nicht übersteigt), so werden gemäß einem sechsten Verfahrensschritt 106 alle von der übrigen Schaltfrequenzregelung bestimmten bzw. ermittelten künftigen Schalthandlungen zugelassen. Liegt der Absolutwert oberhalb der Schwelle, so werden gemäß einem siebten Verfahrensschritt 107 diejenigen durch die übrige Schaltfrequenzregelung bestimmten Schalthandlungen verhindert, die zu einer gegenüber der Änderungsinformation gegenläufigen Änderung der Armspannung führen würden. Gilt beispielsweise gemäß der Änderungsinformation, dass DeltaS/Deltat > 0, so wird davon ausgegangen, dass ein nächstkünftiger Spannungssollwert gegenüber dem zuletzt gültigen Spannungssollwert steigt. Dementsprechend werden innerhalb einer vorgegebenen Zeitspanne diejenigen Schalthandlungen verhindert (bzw. regelungstechnisch unterbunden), die zu einer Reduktion der Armspannung führen.

## Patentansprüche

1. Verfahren zum Betreiben eines Stromrichters (1) mit wenigstens einer Reihenschaltung (RS1-RS6) von Schaltmodulen (SM), die jeweils Halbleiterschalter (S1, S2) und einen Energiespeicher (C) aufweisen, bei dem eine Schaltfrequenz mittels toleranzbasierter Modulation geregelt wird,
eine Vorhersage wenigstens eines Spannungswertes des Stromrichters (1) durchgeführt wird, wobei der Spannungswert ein Spannungssollwert für eine Armspannung (Uarm) des Stromrichters (1) ist, wobei
die Vorhersage auf der Grundlage von wenigstens zwei vorhergehenden Spannungswerten der Armspannung (Uarm) durchgeführt wird, wobei
die Vorhersage das Berechnen einer diskreten zeitlichen Ableitung der vorhergehenden Spannungswerte umfasst, wobei als ein Ergebnis der Vorhersage eine Änderungsinformation darüber bereitgestellt wird, ob ein zu erwartender nächstkünftiger Spannungswert höher oder niedriger als der aktuell gültige Spannungswert ist, wobei
zum Regeln einer Schaltfrequenz Schalthandlungen an den Schaltmodulen (SM) auf der Grundlage der Vorhersage durchgeführt werden, wobei
eine Schalthandlung verhindert wird, die zu einer gegenüber der Änderungsinformation gegenläufigen Änderung der Armspannung führt, wobei
die Schalthandlung nur dann verhindert wird, wenn eine absolute Differenz zwischen dem nächstkünftigen und dem aktuell gültigen Spannungswert größer als eine vorbestimmte Schwelle ist.

2. Stromrichter (1) mit wenigstens einer Reihenschaltung von Schaltmodulen (SM), die jeweils Halbleiterschalter (S1, S2) und einen Energiespeicher (C) aufweisen, aufweisend eine Regelungseinrichtung (2), die zum Durchführen eines Verfahrens nach Anspruch 1 eingerichtet ist.

## Claims

1. A method for operating an inverter (1) with at least one series circuit (RS1-RS6) of switching modules (SM) which each have semiconductor switches (S1, S2) and an energy storage (C), in which
a switching frequency is controlled by means of tolerance-based modulation,
a prediction of at least one voltage value of the inverter (1) is performed, wherein the voltage value is a setpoint voltage value for an arm voltage (Uarm) of the inverter (1), wherein
the prediction is performed based on at least two preceding voltage values of the arm voltage (Uarm), wherein
the prediction comprises calculating a discrete-time derivation of the preceding voltage values, wherein
as a result of the prediction, change information is provided as to whether a to-be-expected upcoming voltage value is higher or lower than the currently valid voltage value, wherein
for controlling a switching frequency, switching actions are performed on the switching modules (SM) based on the prediction, wherein
a switching action which leads to a change in the arm voltage running counter to the change information is prevented, wherein the switching action is prevented only when an absolute difference between the upcoming and the currently valid voltage value is greater than a predetermined threshold.

2. The inverter (1) with at least one series circuit of switching modules (SM) which each have semiconductor switches (S1, S2) and an energy storage (C), having a control apparatus (2) which is configured to perform a method according to claim 1.

## Revendications

1. Procédé de fonctionnement d'un convertisseur de puissance (1) pourvu d'au moins un circuit en série (RS1-RS6) de modules de commutation (SM), qui présentent chacun des commutateurs à semi-conducteurs (S1, S2) et un accumulateur d'énergie (C), dans lequel
une fréquence de commutation est régulée au moyen d'une modulation basée sur la tolérance,
une prédiction d'au moins une valeur de tension du convertisseur de puissance (1) est effectuée, la valeur de tension étant une valeur de consigne de tension pour une tension de bras (Uarm) du convertisseur de puissance (1),
la prédiction étant effectuée en fonction d'au moins deux valeurs de tension précédentes de la tension de bras (Uarm),
la prédiction comprenant le calcul d'une dérivée temporelle discrète des valeurs de tension précédentes,
une information de modification étant fournie, en tant que résultat de la prédiction, pour indiquer si une prochaine valeur de tension attendue est supérieure ou inférieure à la valeur de tension actuellement valide,
des actions de commutation sur les modules de commutation (SM) étant effectuées en fonction de la prédiction pour la régulation d'une fréquence de commutation,
une action de commutation qui conduit à une modification de la tension de bras de sens opposé à l'information de modification étant empêchée,
l'action de commutation n'étant empêchée que lorsqu'une différence absolue entre la prochaine valeur de tension et la valeur de tension actuellement valide est supérieure à un seuil prédéterminé.

2. Convertisseur de puissance (1) pourvu d'au moins un circuit en série de modules de commutation (SM) qui présentent chacun des commutateurs à semi-conducteurs (S1, S2) et un accumulateur d'énergie (C), comprenant un dispositif de régulation (2) conçu pour mettre en œuvre un procédé selon la revendication 1.
